(19) **Europäisches Patentamt**

**European Patent Office**

**Office européen des brevets**

(11) **EP 0 750 389 B1**

(12) **EUROPÄISCHE PATENTSCHRIFT**

(45) Veröffentlichungstag und Bekanntmachung des Hinweises auf die Patenterteilung:
**07.04.1999 Patentblatt 1999/14**

(51) Int Cl.⁶: **H02M 3/335**

(21) Anmeldenummer: **96109795.3**

(22) Anmeldetag: **18.06.1996**

(54) **Umrichter**

Converter

Convertisseur

(84) Benannte Vertragsstaaten:
**AT BE CH DE DK ES GB IT LI NL PT SE**

(30) Priorität: **23.06.1995 DE 19522956**

(43) Veröffentlichungstag der Anmeldung:
**27.12.1996 Patentblatt 1996/52**

(73) Patentinhaber: **SIEMENS AKTIENGESELLSCHAFT**
**80333 München (DE)**

(72) Erfinder: **Semmler, Peter, Dipl.-Ing.**
**85368 Moosburg (DE)**

(56) Entgegenhaltungen:
**EP-A- 0 583 038**    **DE-A- 2 838 009**

- **PATENT ABSTRACTS OF JAPAN vol. 095, no. 002, 31.März 1995 & JP 06 311736 A (FUJITSU LTD), 4.November 1994, & US 5 627 459 A (ITOYAMA) 6.Mai 1997**

EP 0 750 389 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Pulsweitenmodulierte Umrichter, insbesondere Gleichstromumrichter arbeiten im Normalbetrieb mit konstanter Arbeitsfrequenz. Die Regelung der Ausgangsspannung des Umrichters erfolgt durch eine Änderung des Tastverhältnisses $t_{on}/T$ des Ansteuersignals für den elektronischen Schalter des Umrichters. Um eine konstante Spannung an den Ausgangsklemmen des Umrichters zu erhalten, wird diese beispielsweise mit einem vorgegebenen Spannungssollwert in einem Fehlerverstärker verglichen. Der Fehlerverstärker gibt dabei bei einer Abweichung vom Spannungssollwert die verstärkte Regelabweichung an einen Steuereingang des Pulsweitenmodulators weiter. Dieser regelt entsprechend der Größe der verstärkten Regelabweichung das Tastverhältnis ton/T des am Ausgang des Pulsweitenmodulators anliegenden Ansteuersignals für den elektrischen Schalter.

Im Überlastfall, das heißt, der an dem Umrichter ausgangsseitig angeschlossene Verbraucher wird niederohmig, sorgt eine Strombegrenzungsschaltung für eine Reduzierung des Taktverhältnisses des elektronischen Schalters des Umrichters. Diese Strombegrenzungsschaltung mißt z.B. über einen Shunt (Meßwiderstand) den im Primärstromkreis des Umrichters fließenden Strom und schaltet, nach Erreichen eines kritischen Stromschwellenwertes, den elektronischen Schalter vorzeitig ab. Die Messung des Primärstromes und das Abschalten des elektronischen Schalters ist jedoch mit einer Verzugszeit beaufschlagt. Die Verzugszeit setzt sich beispielsweise durch die Schaltzeiten innerhalb einer Vergleichseinheit, der Signallaufzeit im Steuer-IC, der Zeit in der das Ausgangssignal für den elektronischen Schalter zurückgesetzt wird und durch die Schaltzeit, die der elektronische Schalter benötigt bis er nach Eintreffen des Abschaltesignals den Primärstromkreis unterbricht, zusammen. Werden diese zum größten Teil schaltungstechnisch sowie technologisch bedingten Signalverzögerungszeiten addiert, ergibt sich die minimal mögliche Einschaltzeit $t_{onmin}$ für den Umrichter. Da die Ausgangsspannung des Umrichters von dem Verhältnis $t_{on}/T$ bestimmt wird, folgt daraus, daß bei niederohmigem Kurzschluß die Einschaltzeit $t_{on}$ des elektronischen Schalters gegen Null gehen muß. Da dies aber aufgrund der Signalverzögerungszeiten nicht möglich ist, beginnt der Ausgangsstrom bei einem niederohmigen Kurzschluß stark anzusteigen. Dieser Kurzschlußstrom, der unter Umständen für den elektronischen Schalter bzw. den oder die Gleichrichter zerstören kann, tritt verstärkt bei Umrichtern mit hoher Ausgangsspannung, bei Umrichtern mit einem hohen Wirkungsgrad und bei hoher Arbeitsfrequenz auf.

Wird der Umrichter bei Schwachlast betrieben, so muß ebenfalls das Tastverhältnis $t_{on}/T$ stark reduziert werden, da die übertragene Leistung des Systems größer als die dem Umrichter am Schaltungsausgang abverlangte Leistung ist. Bei vorgegebener Periodendauer T wird im Leerlauf dann eine kürzere Einschaltzeit $t_{on}$ des elektronischen Schalters benötigt, die kürzer ist als die minimal mögliche Einschaltzeit $t_{onmin}$ des elektronischen Schalters des Umrichters. Wenn die Ausgangsspannung des Umrichters über einen vorgegebenen Spannungssollwert liegt, hindert zudem der Fehlerverstärker den elektronischen Schalter an einem erneuten Durchschalten. Ein Einschalten des elektronischen Schalters erfolgt erst dann, wenn die Ausgangsspannung wieder unter den Spannungssollwert abgesunken ist und durch den Fehlerverstärker wieder freigegeben wird. Eine solche Schaltungsausgestaltung eines Umrichters ist beispielsweise aus der deutschen Patentschrift DE 28 38 009 bekannt.

Die oben genannten Probleme treten bei einem Umrichter mit konstantem $t_{on}$ und variabler Frequenz nicht auf. Nachteil einer solchen Ausgestaltung eines Umrichters ist allerdings, daß über den gesamten Lastbereich zwischen Leerlauf- und Kurzschlußbetrieb die Arbeitsfrequenz des Umrichters entsprechend den Lastverhältnissen an den Ausgangsanschlußklemmen des Umrichters angepaßt wird und es aufgrund der unterschiedlichen Arbeitsfrequenzen nicht möglich ist, mehrere Umrichter miteinander zu synchronisieren.

Bei einer Spannungsversorgungseinheit mit mehreren Ausgangsspannungen, werden unter Umständen mehrere Umrichter für die entsprechenden Ausgangsspannungen dimensioniert. Aus schaltungstechnischen Gründen werden die speziell dimensionierten Umrichter untereinander synchronisiert. Die Vorteile liegen in der Verwendung einer einheitlichen Schaltfrequenz. Durch geeignete Phasenwahl der beispielsweise im Gegentakt betriebenen Umrichter, verringert sich die Wechselstrombelastung der Zwischenkreiskondensatoren.

Bei synchronisierten Umrichtern kann ein gemeinsames Endstörfilter verwendet werden. Werden die Umrichter nicht synchronisiert betrieben, so würden sich aufgrund der unvermeidlichen Toleranzen die Arbeitsfrequenzen der einzelnen Umrichter geringfügig unterscheiden. Dieser Unterschied in der Arbeitsfrequenz wirkt sich als Schwebung auf die gemeinsame Spannungsversorgung der Umrichterschaltungen aus. Da die Rückwirkungen auf die Spannungsversorgung bestimmten, festgelegten Grenzwerten unterliegen, müssen störende Frequenzen mit entsprechend dimensionierten Filtern von den Versorgungszuleitungen ferngehalten werden. Da die Schwebungsfrequenz der Differenzfrequenzen der einzelnen Umrichter entspricht, beginnt das mögliche Frequenzspektrum bei 0 Hz, wodurch eine Filterdimension unmöglich ist. Die Umrichter müßten bei unsynchronisierten Betrieb einzeln entstört werden.

Aufgabe der Erfindung ist es, einen Umrichter derart auszugestalten, daß dieser im Schwachlast- bzw. Überlastfall frequenzvariabel und im normalen Betriebsfall mit einer konstanten Arbeitsfrequenz mit Pulsweitenmodulation betrieben werden kann.

Die Aufgabe wird durch die Merkmale des Patentanspruchs 1 gelöst.

Die Erfindung weist den Vorteil auf, daß im normalen Betriebsfall der Umrichter mit konstanter Frequenz arbeitet und mit anderen Umrichtern synchronisiert werden kann, während im Schwachlast- bzw. Überlastfall das Tastverhältnis durch eine neue Periodendauer geändert wird und so im Schwachlast- und Kurzschlußfall die Arbeitsfrequenz reduziert wird und ein weiteres Ansteigen der Ausgangsspannung bzw. des Kurzschlußstromes verhindert wird.

In der erfindungsgemäßen Schaltungsanordnung werden die Vorteile eines frequenzvariablen Umrichters im Schwachlast- und Überlastfall mit den Vorteilen eines frequenzkonstanten mit Pulsbreitenmodulation betriebenen Umrichters kombiniert. Im normalen Betriebsfall arbeitet der Umrichter wie ein Umrichter mit konstanter Frequenz und kann mit anderen Umrichtern synchronisiert werden. Im Überlast- bzw. Schwachlastfall behält der Umrichter seine minimale Einschaltdauer $t_{onmin*}$ bei, ändert aber entsprechend den Strom- oder Spannungsverhältnissen die Arbeitsfrequenz. Im Fehlerfall, der beispielsweise bei Lastabwurf oder Kurzschluß eintritt, wird dem Taktgeber (VCO) ein Stellsignal zugeführt wodurch sich die Taktfrequenz solange ändert, bis sich wieder ein stationärer Betriebszustand einstellt. Ein unzulässig hoher Ausgangsstrom im Überlastfall sowie eine Paketansteuerung im Schwachlastfall wird hierdurch wirksam unterbunden. Bei synchron arbeitenden Umrichtern wird der Umrichter bei dem der Fehlerfall auftrat, solange von den anderen abgekoppelt, bis sich wieder ein normaler Betriebszustand einstellt.

Weitere Besonderheiten der Erfindung werden aus der nachfolgenden näheren Erläuterung eines Ausführungsbeispiels anhand von Zeichnungen ersichtlich.

Es zeigen:

Fig. 1          ein Blockschaltbild,
Fig. 2A-2F      Impulsdiagramme,
Fig. 3          eine schaltungstechnische Realisierung,
Fig. 4          Ausgangskennlinien des Umrichters,
Fig. 5a/b       weitere Schaltungsbeispiele, und
Fig. 6a/b       Synchronisationsschaltungen.

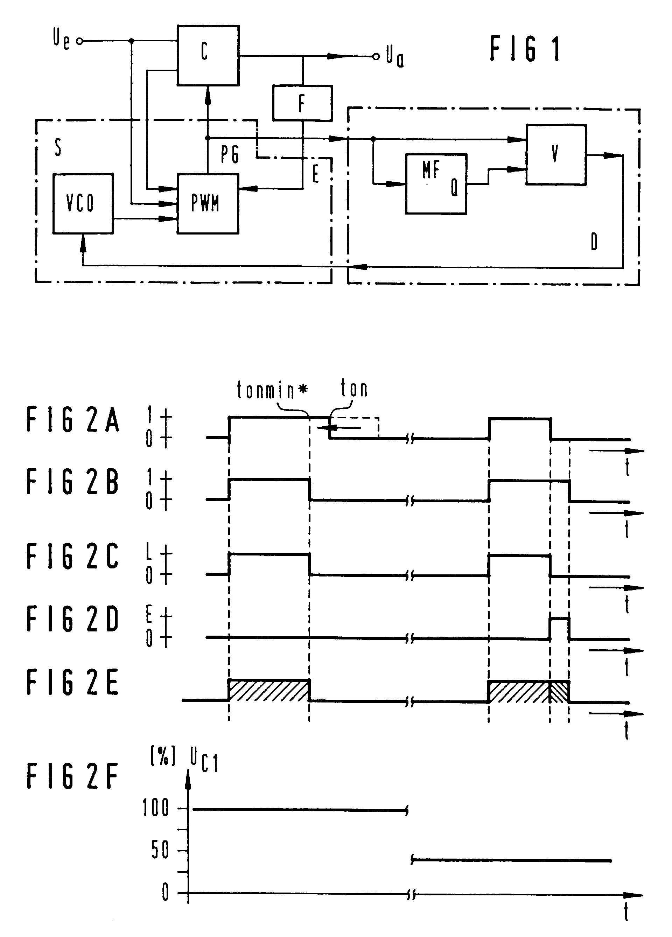

Figur 1 zeigt eine im Blockschaltbild dargestellte Schaltungsanordnung einen Umrichter mit Ansteuermodul. Dieser Umrichter mit Ansteuermodul besteht im wesentlichen aus dem Schaltungsmodul eines Konverters C, eines Pulsweitenmodulators PWM, eines Fehlerverstärkers F sowie eines Taktgebers, dessen Frequenz (VCO) veränderbar ist und aus einer Detektorschaltung D, die z.B. einen Kurzschluß- bzw. Überlastfall erkennt und entsprechend über ihr Ausgangssignal die Frequenz des Taktgebers (VCO) regelt. In der Detektorschaltung D ist im wesentlichen ein auf eine bestimmbare Einschaltzeit $t_{onmin*}$ dimensioniertes monostabiles Kippglied MF, sowie ein Verhältnisbildner V vorgesehen. An den Anschlußklemmen des Verhältnisbildners V liegt einerseits an einem ersten Eingang das Ausgangssignal des Monoflops MF sowie andererseits an einem zweiten Eingang das Ansteuersignal des elektronischen Schalters. Der Verhältnisbildner dient dazu, das Verhältnis zwischen der Einschaltdauer des Ansteuersignals $t_{on}$ zur Einschaltdauer $t_{onmin*}$ des Ausgangssignals des Monoflops MF zu bilden. Diese "Verhältnisbildung", wird durch eine synchrone Mittelwertbildung der oben aufgeführten Signale erreicht.

Der Pulsweitenmodulator PWM wird über einen primärseitig fließenden Strom im Meßwiderstand des Hauptstromkreises und einer sekundärseitig am Umrichter anliegenden Ausgangsspannung beeinflußt. Das Ausgangssignal des Pulsweitenmodulators PWM bestimmt den Tastgrad des elektronischen Schalters des Umrichters C. Dieses an den Ausgangsklemmen PG des Pulsweitenmodulators PWM anliegende Ausgangssignal, dessen Impulsbreite beeinflußt von den primär- bzw. sekundärseitig am Übertrager des Umrichters ermittelten Meßwerten, liegt am Eingang der Detektorschaltung D.

Mit dem Ansteuersignal $t_{on}$ für den elektronischen Schalter wird das in der Detektorschaltung D angeordnete Monoflop MF getriggert. Dieses Monoflop MF erzeugt ein definiertes zeitliches Fenster für die synchrone Mittelwertbildung. Die Pulslänge des Ausgangssignals des Monoflops $t_{onmin*}$ legt die Einschaltzeit fest, ab der der Umrichter frequenzmoduliert arbeitet.

Während der Zeit $t_{onmin*}$ in der am Ausgang Q des Monoflops MF ein Impulssignal anliegt, wird ein analoges Stellsignal $U_{c1}$ unabhängig von der sich einstellenden Frequenz gewonnen. Dieses Stellsignal $U_{c1}$ beeinflußt die Ausgangsfrequenz des Taktgebers (VCO). Bei dem gezeigten Blockschaltbild in Fig. 1 ergibt sich beispielsweise im Überlast- bzw. Schwachlastfall nachfolgende Regelschleife: $t_{on} \leq t_{onmin*}$; Detektor verringert Oszillatorfrequenz; effektives Tastverhältnis $t_{on} / T_{neu}$ wird kleiner.

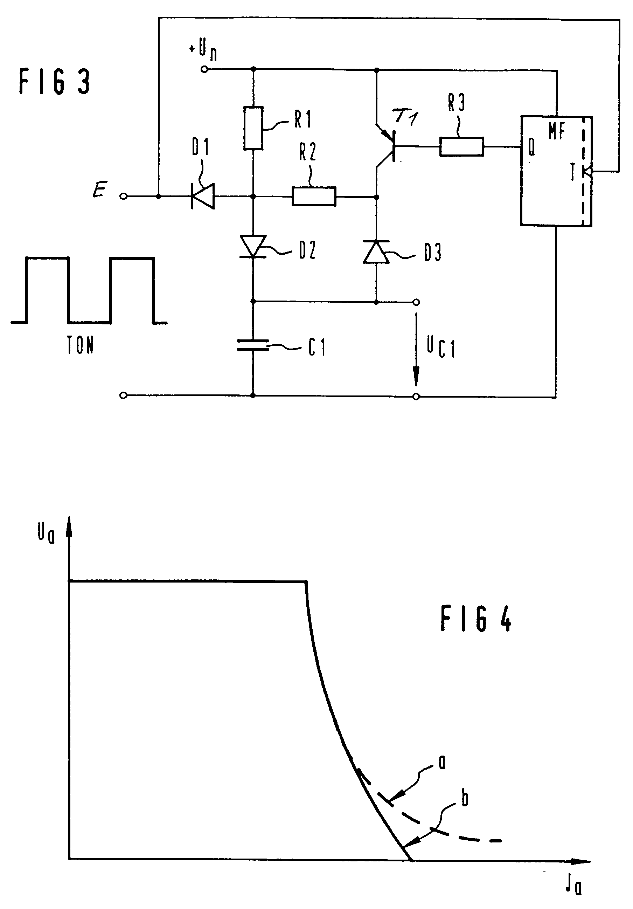

Der Umrichter wird in dieser Betriebsphase mit konstanter Einschaltzeit $t_{on}$, aber mit variabler Frequenz betrieben. Die Arbeitsweise der Detektorschaltung D wird in Figur 2 anhand von Impulsdiagrammen wiedergegeben und anhand des in Figur 3 dargestellten Schaltungsaufbaus erläutert. Im Überlastfall wird durch die Detektorschaltung D der Arbeitspunkt des Umrichters erkannt, ab dem der Ausgangsstrom unkontrolliert anzusteigen beginnt.

Das Ansteigen des Ausgangsstromes tritt bei der minimal möglichen Einschaltzeit $t_{onmin}$ auf, da das Tastverhältnis aufgrund der Verzugszeiten nicht weiter verkürzt werden kann. Die Detektorschaltung D verhindert, daß der Umrichter diese kürzest mögliche Einschaltdauer $t_{onmin}$ erreicht. Die aktuelle Einschaltzeit $t_{on}$ wird gemessen. Bei Annäherung der Einschaltzeit $t_{on}$ an die minimale mögliche Einschaltzeit $t_{onmin}$, wird die Einschaltzeit des elektronischen Schalters konstant gehalten und die Arbeitsfrequenz des Taktgebers (VCO) auf $f_{neu} = 1/T_{neu}$ erniedrigt. Das effektive Tastverhältnis $t_{on}/T_{neu}$ verringert sich somit, ohne daß sich die Einschaltzeit ton zu verkürzen müßte. Die konstante Einschaltzeit $t_{onmin*}$ des MF liegt vorzugsweise geringfügig über $t_{onmin}$. Das Verhältnis $t_{on}/t_{onmin*}$ der aktuellen Einschaltdauer $t_{on}$ zur festgelegten minimalen Einschaltdauer $t_{onmin*}$ wird in eine, diesem Tastverhältnis proportionale Spannung umgesetzt.

In Figur 2 sind zur Erläuterung der in der Figur 1 wiedergegebenen Schaltungsanordnung Impulsdiagramme 2A bis 2F wiedergegeben. Unter Zeile 2A ist das Ansteuersignal $t_{on}$ gezeigt, das entsprechend pulsweitenmoduliert durch den Pulsweitenmodulator PWM den elektronischen Schalter des Umrichters steuert. In Zeile 2B ist das Ausgangssignal des monostabilen Kippgliedes MF wiedergegeben. Aufgrund einer zunehmenden Überlast oder Entlastung am Ausgang des Umrichters wird die Einschaltzeit $t_{on}$ bzw. die Impulsbreite des Ansteuersignals ständig verringert. Ab einem bestimmten Zeitpunkt, hier $t_{on} \leq t_{onmin*}$ wird die Frequenz des Taktgebers verringert. In Figur 2C ist die Ladezeit bzw. in Zeile 2D die Entladezeit eines im Vergleicher V der Detektorschaltung D angeordneten Kondensators C1 wiedergegeben. Der Kondensator C1 wird wie in Zeile 2D angedeutet entladen, wenn die Impulsbreite des Ansteuersignals die Impulsbreite des vom Monoflop MF abgegebenen Ausgangssignals unterschreitet. In Zeile 2E ist in gewisser Weise auch die Logik der Detektorschaltung D wiedergegeben: Ist die Impulsbreite ton des Ansteuersignals größer als die Impulsbreite $t_{onmin*}$ des Monoflops MF so wird während dem "Low" -Signal am Ausgang des Monoflops MF die Ladung des Kondensators C1 gehalten. Wird die Impulsbreite des Ansteuersignals kleiner als die Impulsbreite des Monoflops MF, so verkürzt sich entsprechend die Ladezeit des Kondensators. Während der Zeitdifferenz $t_{onmin*} - t_{on}$ entlädt sich der Kondensator Cl(siehe Zeile 2D). Dargestellt ist das am Kondensator C1 anliegende Stellsignal in Zeile 2F. Während der Ladephase liegt am Kondensator C1 die maximal mögliche Spannung über R1 an. Wenn die Impulsdauer des Monoflops MF die Impulsdauer des Ansteuersignals unterschreitet wird der Kondensator C1 entsprechend über R2 entladen. Die den Taktgeber (VCO) steuernde Spannung $U_{C1}$ (siehe Figur 3) entspricht jeweils dem Verhältnis der Impulsbreiten $t_{onmin*}$ zu $t_{on}$.

Figur 3 zeigt eine schaltungstechnische Realisierung der Detektorschaltung D. Sie setzt sich aus dem Monoflop MF und dem synchronen Mittelwertbilder V zusammen. Am Eingang des Detektors D der mit E bezeichneten Anschlußklemmen liegt das vom Pulweitenmodulator PWM abgegebene Ansteuersignal $t_{on}$ an. Das Stellsignal $U_{C1}$ für den Taktgeber (VCO) wird am Kondensator C1 abgegriffen. Mit steigender Flanke des am Eingang E anliegenden Ansteuersignals wird gleichzeitig die monostabile Kippstufe MF getriggert. Diese gibt am Ausgang Q einen Impuls bestimmter Impulsbreite ab. Während dem High-Potential des Impulses wird beispielsweise der Transistor T1 gesperrt. Der Ladestromkreis für den Kondensator C1 wird von der mit $U_h$ bezeichneten Betriebspotentialquelle über den Widerstand R1 und die Diode D2 geladen. Unterschreitet die Impulsbreite des Ansteuersignals die Impulsbreite des vom Monoflop MF abgegebenen Impulses, so wird der Kondensator C1 entladen. Diese Entladung erfolgt über die Diode D1, über den Widerstand R2 und der Diode D3. Liegt am Ausgang des Monoflops Low-Potential an, wird der Transistor T1 durchgeschaltet. Im durchgeschalteten Zustand des Transistors T1 liegt an der Diode D3 Sperrspannung an und der Kondensator C1 kann sich nicht mehr entladen. Das Entladen des Kondensators C1 findet nur während der Dauer des positiven Ausgangsimpulses des Monoflops MF nach Beendigung des positiven Zustandes des Ansteuersignals statt. Zu allen anderen Zeiten wird die gemittelte Kondensatorladung $U_{C1}$ gehalten. Somit ergibt sich die Spannung am Kondensator C1 zu $U_{c1} = v \times t_{on}/t_{onmin*}$. Die proportionale Verstärkung v und somit die Steilheit der Steuerkennlinie ist von den Lade- bzw. Entladewiderständen R1 und R2 abhängig.

In der Figur 4 sind die mit a, b gekennzeichneten Kurvenverläufe dargestellt. Der mit a bezeichnete Kurvenverlauf tritt dann ein, wenn wie beispielsweise bei einem niederohmigen Kurzschluß die Impulsdauer des Ansteuersignals gegen Null gehen muß, aber aufgrund der technologisch bedingten Signallaufzeiten dies nicht möglich ist und der Ausgangsstrom weiter zunimmt. Die Wirkungsweise der Detektorschaltung D und die damit zu erzielende Ausgangskennlinie eines Umrichters zeigt der mit b gekennzeichnete Kurvenverlauf.

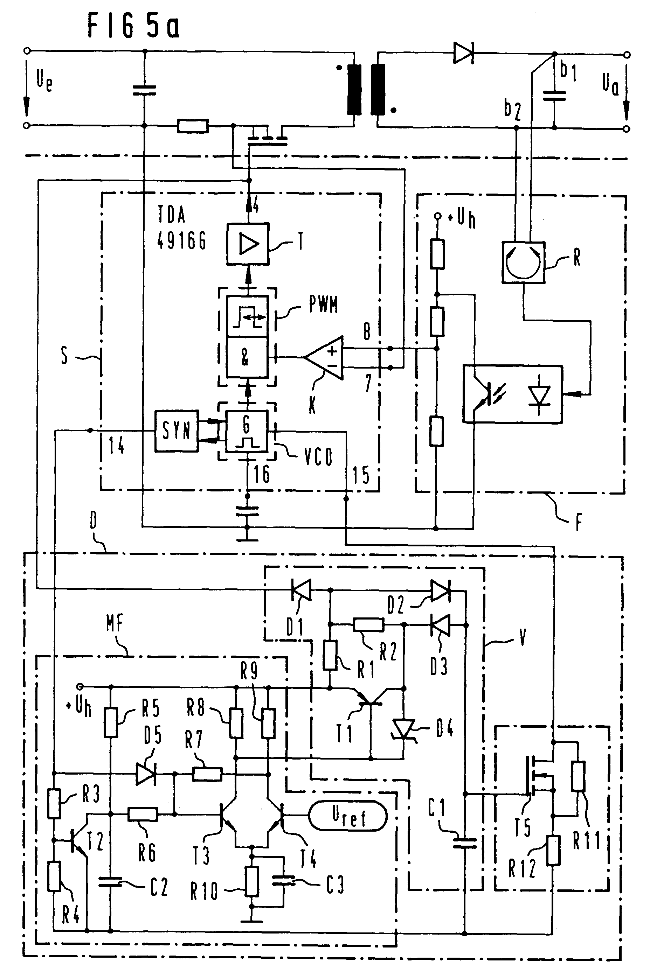

Figur 5a zeigt eine Schaltungsanordnung in Verbindung mit dem Steuerbaustein TDA4916G der Firma Siemens AG. Zur Steuerung des elektronischen Schalters des Umrichters C dient eine Steuerschaltung S (TDA 4916 G). Der elektronische Schalter ist mit seiner Steuerelektrode an dem Steuerausgang 4 der Steuerschaltung S angeschlossen. An den Ausgängen bl, b2 des Umrichters ist der Regler R angeschlossen. Zwischen dem Regler R und der Steuerschaltung S ist ein Opto-Koppler angeordnet, dessen Photodiode an den Regler R angeschlossen ist. Der Phototransistor des Opto-Kopplers liegt emitterseitig am Bezugspotential. Die Steuerschaltung S enthält ferner den Taktgeber G (durch die Beschaltung zu einem spannungsgesteuerten Oszillator (VCO) erweitert), an dessen Ausgang eine aus einer Verknüpfungsanordnung und dem Pulsweitenmodulator bestehende Anordnung angeschlossen ist. Diese Anordnung wird durch einen Komparator K gesteuert. Zwischen dem Ausgang des Pulsweitenmodulators und der Gate-Elektrode des elektronischen Schalters liegt ein Treiber T, der an seinem Ausgang Ansteuerimpulse mit veränderbarem Tastverhältnis an die Gate-Elektrode des elektronischen Schalters abgibt. Desweiteren ist ein Synchronisationsmodul SYN in der Steuerschaltung S vorhanden, das Einfluß auf den Taktgenerator nimmt.

Das für die Schaltungsanordnung D vorgesehene Monoflop MF zur Erzeugung der Zeit $t_{onmin*}$ ist mit den Bauelementen R3, R4, R5, T2 und C2 realisiert. Ein "High"-Signal am Ausgang 14 der Steuerschaltung S steuert über die Pegelanpassung R3 und R4 den Transistor T2 an, wodurch sich C2 entladen kann. Das Potential an dem Kondensator C2 beträgt nach der Entladung etwa 0 Volt ( = $U_{ce}$ des gleichgesteuerten Transistors T2) und stellt somit einen definierten Startwert für die anschließende Ladung während der Zeit $t_{onmin*}$ dar. Sobald das Signal am Ausgang 14 der Steuerschaltung S ein "Low"-Potential führt, wird der Transistor T2 gesperrt und C2 kann sich über R5 aufladen. Das Spannungspotential am Kondensator C2 wird über einen Differenzverstärker, bestehend aus R8, R9, R10, T3 und T4 mit einer Referenzspannungsquelle Uref verglichen. Der Differenzverstärker kann auch als Operationsverstärker- bzw. Komparator ausgeführt werden. Die Referenzspannungsquelle $U_{Ref}$ kann ebenfalls im Steuerbaustein S angeordnet sein. Nur solange das Potential am Kondensator C2 kleiner als die Referenzspannung $U_{Ref}$ ist, kann der synchrone Mittelwertbilder V, bestehend aus R1, R2, D1, D2, D3, T1 und C1 wie unter Fig. 3 beschrieben, arbeiten.

Der Widerstand R7 bewirkt eine Mitkopplung des Differenzverstärkers und ermöglicht somit kürzere Schaltzeiten. Das Schaltverhalten wird durch C3 bzw. der Antisättigungsdiode D4 noch weiter verbessert. Erreicht das Spannungpotential an C2 die Höhe der Referenzspannung, so schaltet der Transistor T3 des Differenzverstärkers durch und der Transistor T1 wird ebenfalls leitend gesteuert, wodurch sich der Kondensator C1 des synchronen Mittelwertbildners V nicht weiter entladen kann. Die Schaltung bildet somit das Verhältnis $V \cdot t_{on}/t_{onmin*}$ am Kondensator C1 ab. Der Verstärkungsfaktor V läßt sich durch die Dimensionierung von R1 und R2 einstellen. Das am C1 gewonnene Stellsignal steuert das Stellglied T5 an, das die Arbeitsfrequenz des Steuerbausteins S bestimmt.

Fall 1: $t_{on} > t_{onmin*}$

Spannung an C1 ≈ Spannung des Betriebspotentials Uh - der Transistor T5 ist durchgesteuert, d.h. R11 wird kurzgeschlossen und der Widerstand R12 bestimmt die "normale", feste Arbeitsfrequenz des Konverters C.

Fall 2: $t_{on} < t_{onmin*}$

Im Verhältnis $V \cdot t_{on}/t_{onmin*}$ verringert sich die Spannung an dem Kondensator C1, wodurch T5 aktiv wird, d.h. der für die Frequenz verantwortliche Widerstand R12 + (R11 // $R_{ds}$) erhöht sich, wodurch die Arbeitsfrequenz des Steuerbausteins S verringert wird.

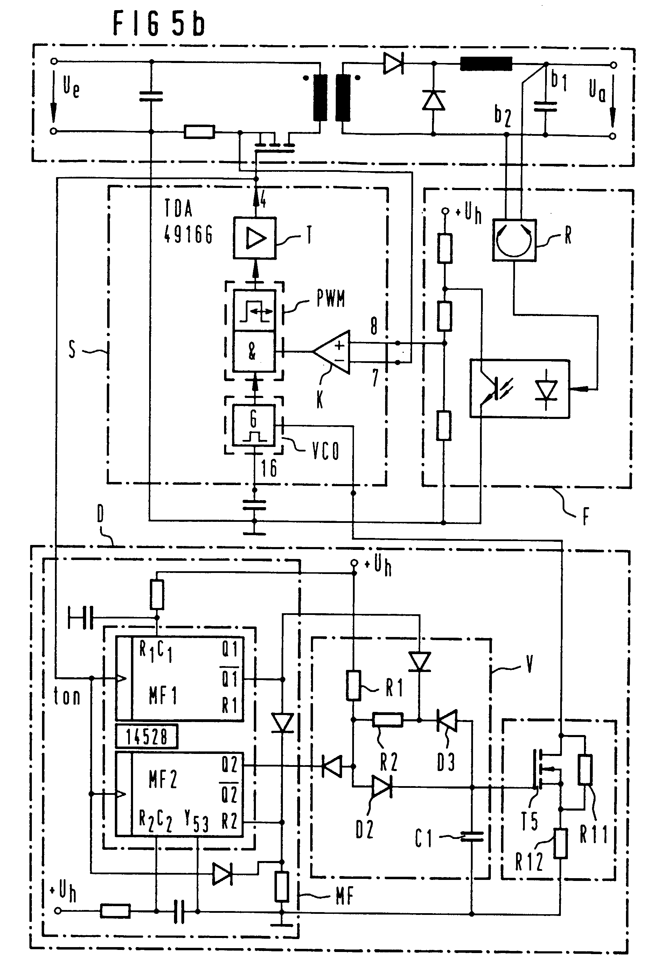

Figur 5b zeigt eine weitere schaltungstechnische Ausgestaltung des in Figur 1 dargestellten Blockschaltbildes. Die Funktion der in Figur 5b dargestellten Schaltungsanordnung entspricht der Funktion der in 5a dargestellten Schaltungsanordnung, wobei das diskret aufgebaute monostabile Kippglied MF durch einen integrierten Schaltkreis (IC14528), hier zwei unabhängige monostabile Kippstufen MF1, MF2 ersetzt wird. Prinzipiell reicht für die Funktion der Schaltung ein monostabiles Kippglied aus. Der integrierte Schaltkreis (IC 14528) verursacht aber eine Schaltverzögerung des Ansteuerungssignals für den synchronen Mittelwertbilder V. Um diese Schaltungsverzögerung zu kompensieren wird die zweite monostabile Kippstufe MF2 in diesem integrierten Schaltkreis zur Impulsaufbereitung verwendet.

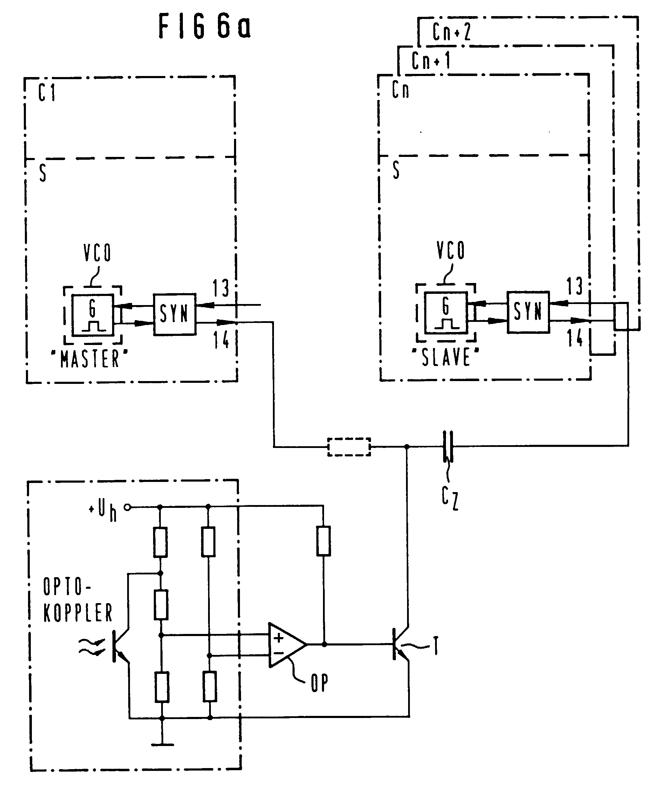

In Figur 6a ist eine Schaltungsanordnung dargestellt, bei der mehrere Konverter C1,...,Cn synchron arbeiten. Beim Übergang eines der Umrichter (hier Cn) vom frequenzkonstanten zum frequenzvariablen Betrieb muß dieser von der gemeinsamen Synchronisation abgekoppelt werden.

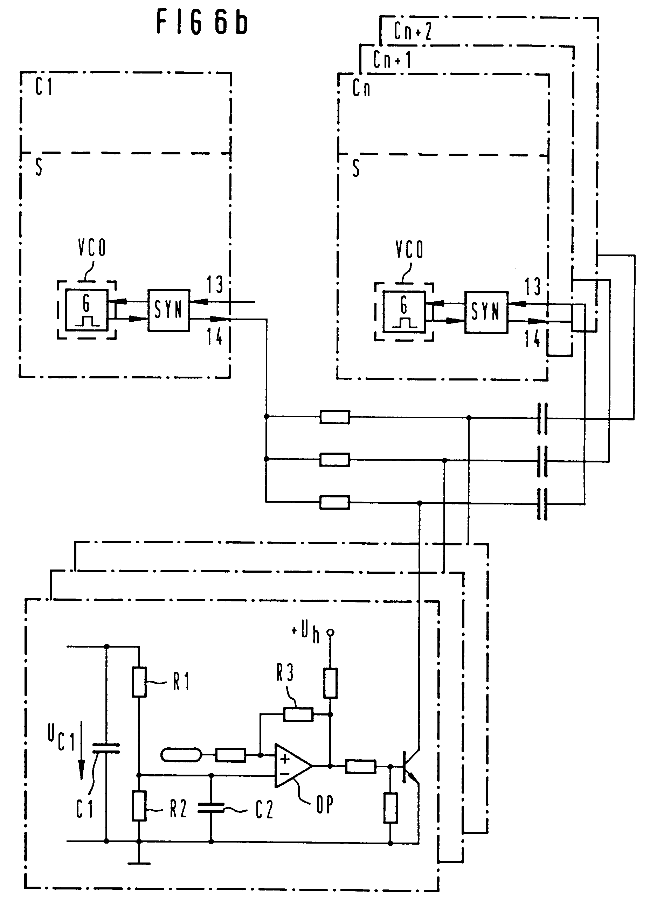

In den Figuren 6a, 6b sind hierfür beispielsweise zwei Möglichkeiten aufgezeigt. In der in Figur 6a dargestellten Schaltungsanordnung wird die Synchronisation bei Einsatz der Strombegrenzung unterbrochen. Der Synchronisationstakt ist am Eingang 13 des Steuerbausteins kapazitiv angekoppelt. Wird der Ausgang des "Slaves" so stark belastet, daß die Strombegrenzung des Konverters eingreift, so schaltet der Operationsverstärker OP seinen Ausgang auf High-Potential und der Transistor T wird angesteuert. Die vom Master ankommenden Synchronisationsimpulse werden somit vom "slave" abgekoppelt, wodurch er unsynchronisiert arbeitet und, falls der Ausgangsstrom weiter ansteigen sollte, seine Arbeitsfrequenz·entsprechend eines frequenzvariablen Konverters reduzieren kann. Der Konverter arbeitet nach dem Einsatz der Strombegrenzung unsynchronisiert. Will man erreichen, daß die Synchronisation des Umrichters erst beim Eingreifen der erfindungsgemäßen Schaltung verlassen wird, so kann man eine Schaltung, wie in Figur 6b dargestellt verwenden. Der Operationsverstärker OP überprüft das Stellsignal an dem Kondensator C1 und vergleicht es mit einer Referenzspannung $U_{ref}$. Die Widerstände R1, R2 sind für die Pegelanpassung bzw. auch in Verbindung mit dem Kondensator C2 für eine weitere Glättung des Signals zuständig. Der Widerstand R3 bewirkt eine Mitkopplung um eine Hysterese zwischen dem synchronen und nicht synchronen Betrieb des Konverters zu gewährleisten. Da sich das Stellsignal $U_{C1}$ am Kondensator C1 erst beim Eingreifen der oben beschriebenen Schaltung ändert, setzt der Übergang vom frequenzkonstanten zu dem frequenzvariablen Betrieb erst ein, sobald dieser für die "korrekte" Funktion der Schaltung notwendig ist.

**Patentansprüche**

1. Umrichter mit einem Pulsweitenmodulator (PWM), wobei die Dauer der Impulse des vom Pulsweitenmodulator abgegebenen Ansteuersignals durch mindestens eine Stellgröße veränderbar und die Taktfrequenz des Umrichters durch einen an den Modulator angeschlossenen spannungsgesteuerten Oszillators (VCO) regelbar ist,
**dadurch gekennzeichnet,**
daß ein synchroner Mittelwertbilder (V) vorgesehen ist, dessen erstem Eingang ein von der Vorderflanke des Ansteuersignals ausgelöster Vergleichsimpuls konstanter Dauer und dessen zweitem Eingang das vom Pulsweitenmodulator abgegebene Ansteuersignal zugeführt ist, wobei bei gleicher oder geringerer Impulsdauer des Ansteuersignals gegenüber dem Vergleichsimpuls, ein vom synchronen Mittelwertbilder (V) abgegebenes Spannungspotential (Stellsignal) die Ausgangsfrequenz des spannungsgesteuerten Oszillators (VCO) verringert.

2. Schaltungsanordnung nach Anspruch 1,
**dadurch gekennzeichnet,**
daß ein monostabiles Kippglied zur Erzeugung des am zweiten Eingang des synchronen Mittelwertbilders(V) anliegenden Impulses vorgesehen ist, wobei die Dauer des Vergleichsimpulses geringfügig über dem minimal möglichen vom Pulsweitenmodulator abgebbaren Impuls des Ansteuersignals liegt.

3. Schaltungsanordnung nach Anspruch 1,
**dadurch gekennzeichnet,**
daß im einem Kurzschluß- oder Leerlauffall eines pulsweitenmodulierten Umrichters das vom Pulsweitenmodulator (PWM) abgegebene Ansteuersignal einen Impuls gleichbleibender minimaler Dauer aufweist.

4. Schaltungsanordnung nach Anspruch 2,
**dadurch gekennzeichnet,**

daß der Ausgang des monostabilen Kippgliedes (MF) über einen Widerstand (R3) mit der Basis eines Transistors (T1) verbunden ist,
daß ein erster Widerstand (R1) mit dem Emitter des Transistors (T1) sowie das bistabile Kippglied (MF) mit einer ersten Betriebspotentialspannung ($U_h$) verbunden ist,
daß der Kollektor des Transistors (T1) mit dem einen Anschluß eines zweiten Widerstandes (R2) sowie mit der Kathode einer weiteren Diode (D3) verbunden ist,
daß ein Kondensator (C1) mit der Anode der dritten Diode (D3) sowie mit der Kathode einer zweiten Diode (D2) verbunden ist,

daß der weitere Anschluß des ersten Widerstandes (R1) mit der Anode der ersten Diode (D1), sowie mit der Anode der zweiten Diode (D2) und einem weiteren Anschluß des zweiten Widerstandes (R2) verbunden ist,
daß der Schaltungseingang (E) sowohl mit der Kathode der ersten Diode (D1) und dem Triggereingang (T) des bistabilen Kippgliedes (MF) verbunden ist und
daß ein weiterer Anschluß des Kondensators (C1) sowie das monostabile Kippglied (MF) an einer einem Massepotential entsprechendem zweiten Betriebspotentialspannung angeschlossen ist.

5. Schaltungsanordnung nach einem der vorhergehenden Ansprüche,
**dadurch gekennzeichnet,**

daß mehrere dieser Schaltungsanordnungen über eine Synchronisationseinheit von einem Master-Taktgenerator gesteuert werden,
daß jedem Mittelwertbilder (V) jeder Schaltungsanordnung eine Vergleichseinheit (VGL) nachgeordnet ist, wobei in der Vergleichseinheit (VGL) das vom Mittelwertbilder (V) abgegebene Spannungspotential des Stellsignals mit einem Referenzspannungspotential verglichen wird und jeweils der Umrichter bei einem Kurzschluß- oder Leerlauffall vom Master-Taktgenerator abgekoppelt wird.

**Claims**

1. Converter with a pulse width modulator (PWM), it being possible for the duration of the pulses of the driving signal output by the pulse width modulator to be altered by at least one manipulated variable and it being possible for the clock frequency of the converter to be regulated by a voltage-controlled oscillator (VCO) connected to the modulator, characterized
in that a synchronous averaging unit (V) is provided, to whose first input a comparison pulse of constant duration triggered by the leading edge of the driving signal is fed and to whose second input the driving signal output by the pulse width modulator is fed, it being the case that when the pulse duration of the driving signal is less than or equal to that of the comparison pulse, a voltage potential (actuating signal) output by the synchronous averaging unit (V) reduces the output frequency of the voltage-controlled oscillator (VCO).

2. Circuit arrangement according to Claim 1, characterized
in that a monostable multivibrator is provided for generating the pulse applied to the second input of the synchronous averaging unit (V), the duration of the comparison pulse being slightly above the minimum possible pulse of the driving signal that can be output by the pulse width modulator.

3. Circuit arrangement according to Claim 1, characterized
in that, in a short-circuit or no-load situation of a pulse width-modulated converter, the driving signal output by the pulse width modulator (PWM) has a pulse of constant, minimal duration.

4. Circuit arrangement according to Claim 2, characterized

in that the output of the monostable multivibrator (MF) is connected via a resistor (R3) to the base of a transistor (T1),
in that a first resistor (R1) connected to the emitter of the transistor (T1) and also the bistable multivibrator (MF) are connected to a first operating potential voltage ($U_h$),
in that the collector of the transistor (T1) is connected to one terminal of a second resistor (R2) and also to the cathode of a further diode (D3),
in that a capacitor (C1) is connected to the anode of the third diode (D3) and also to the cathode of a second diode (D2),
in that the further terminal of the first resistor (R1) is connected to the anode of the first diode (D1) and also to the anode of the second diode (D2) and to a further terminal of the second resistor (R2),
in that the circuit input (E) is connected both to the cathode of the first diode (D1) and to the trigger input (T) of the bistable multivibrator (MF), and
in that a further terminal of the capacitor (C1) and also the monostable multivibrator (MF) are connected to a second operating potential voltage, which corresponds to an earth potential.

5. Circuit arrangement according to one of the preceding claims, characterized

in that a plurality of these circuit arrangements are controlled by a master clock generator via a synchronization unit,
in that a comparison unit (VGL) is arranged downstream of each averaging unit (V) of each circuit arrangement, in the comparison unit (VGL) the voltage potential of the actuating signal that is output by the averaging unit (V) being compared with a reference voltage potential and in each case the converter being decoupled from the master clock generator in the event of a short-circuit or no-load situation.

**Revendications**

1. Convertisseur avec un modulateur à largeur d'impulsions (PWM), la longueur des impulsions du signal d'excitation délivré par le modulateur à largeur d'impulsions pouvant être modifiée par au moins une valeur de réglage et la fréquence des impulsions du convertisseur étant réglable par un oscillateur commandé par la tension (VCO), qui est raccordé au modulateur,
**caractérisé par le fait**
qu'il est prévu un générateur synchrone de valeur moyenne (V), une impulsion de comparaison déclenchée par le flanc montant du signal d'excitation étant appliquée à sa première entrée et le signal d'excitation délivré par le modulateur à largeur d'impulsions étant appliqué à sa deuxième entrée, une tension (signal de réglage) délivrée par le générateur synchrone de valeur moyenne (V) faisant baisser, lorsque la longueur de l'impulsion du signal d'excitation est égale ou inférieure à celle de l'impulsion de comparaison, la fréquence de sortie de l'oscillateur commandé par la tension (VCO).

2. Montage selon la revendication 1,
**caractérisé par le fait**
qu'il est prévu une bascule monostable pour générer l'impulsion appliquée à la deuxième entrée du générateur synchrone de valeur moyenne (V), la longueur de l'impulsion de comparaison étant légèrement plus longue que celle de l'impulsion la plus courte possible qui puisse être délivrée par le modulateur à largeur d'impulsions.

3. Montage selon la revendication 1,
**caractérisé par le fait**
que, en cas de court-circuit ou de marche à vide d'un convertisseur à impulsions modulées en largeur, le signal d'excitation délivré par le modulateur à largeur d'impulsions (PWM) comporte une impulsion dont la longueur reste en permanence la plus courte possible.

4. Montage selon la revendication 2,
**caractérisé par le fait**

que la sortie de la bascule monostable (MF) est reliée à la base d'un transistor (T1) à travers une résistance (R3),
qu'une première résistance (R1) est reliée à l'émetteur du transistor (T1) et que la bascule bistable (MF) est reliée à une première tension de service ($U_h$),
que le collecteur du transistor (T1) est relié à une des bornes d'une deuxième résistance (R2) ainsi qu'à la cathode d'une autre diode (D3),

qu'un condensateur (C1) est relié à l'anode de la troisième diode (D3), ainsi qu'à la cathode de la deuxième diode (D2),

que la deuxième borne de la première résistance (R1) est reliée à l'anode de la première diode (D1), ainsi qu'à l'anode de la deuxième diode (D2) et à la deuxième borne de la deuxième résistance (R2),

que l'entrée du circuit (E) est reliée aussi bien à la cathode de la première diode (D1) qu'à l'entrée de déclenchement (T) de la bascule bistable (MF) et

qu'une deuxième borne du condensateur (C1), ainsi que la bascule monostable (MF) sont reliées à une deuxième tension de service correspondant à un potentiel de masse.

5.  Montage selon l'une des revendications précédentes,
    **caractérisé par le fait**

    que plusieurs de ces montages sont commandés, à travers une unité de synchronisation, par un générateur maître de rythme,

    qu'une unité de comparaison (VGL) est placée derrière chaque générateur de valeur moyenne (V) de chaque montage, la tension du signal de réglage fournie par le générateur de valeur moyenne étant, dans l'unité de comparaison (VGL), comparée à une tension de référence et le convertisseur étant, dans chaque cas de court-circuit ou de marche à vide, découplé du générateur maître de rythme.

FIG 1

FIG 2A

FIG 2B

FIG 2C

FIG 2D

FIG 2E

FIG 2F

FIG 3

FIG 4

# FIG 5a

# FIG 5 b

# FIG 6a

# FIG 6b